# EUROPÄISCHE PATENTSCHRIFT

(11) **EP 1 566 090 B1**
(45) Veröffentlichungstag und Bekanntmachung des Hinweises auf die Patenterteilung: **12.09.2007**
(21) Anmeldenummer: 05101096.5
(22) Anmeldetag: 15.02.2005
(51) Int. Cl.: A01D 43/08

(54) **Maschine zum Mähen von stängelartigem Erntegut**
Machine for cutting standing crops
Machine pour couper des plantes à tige

(30) Priorität: 20.02.2004 DE 102004008340
(43) Veröffentlichungstag der Anmeldung: 24.08.2005
(73) Patentinhaber: Maschinenfabrik Kemper GmbH & Co. KG, 48703 Stadtlohn (DE)
(72) Erfinder: Wübbels, Richard, 46414 Rhede (DE)
(74) Vertreter: Holst, Sönke

(56) Entgegenhaltungen:
- EP-A- 0 760 200
- EP-A- 1 338 191
- WO-A-02/056672

## Beschreibung

Die Erfindung betrifft eine Maschine zum Mähen von stängelartigem Erntegut zur Anbringung an einem Feldhäcksler, mit wenigstens einem Mäh- und Einzugszusammenbau zum Abschneiden und Abtransportieren von Erntegut und einem Abgabeförderer, dem Erntegut vom Mäh- und Einzugszusammenbau zuführbar ist und der eingerichtet ist, es einem Einzugskanal des Feldhäckslers zu übergeben, wobei die Geschwindigkeit des Abgabeförderers gegenüber der Geschwindigkeit des Mäh- und Einzugszusammenbaus veränderbar ist.

Maschinen zum Mähen von stängelartigem Erntegut werden in Kombination mit selbstfahrenden oder gezogenen bzw. angebauten Feldhäckslern zur Ganzpflanzenernte verwendet, beispielsweise zur Ernte von Silomais. Ein gebräuchlicher Typ einer derartigen Maschine ist in der EP 0 760 200 A beschrieben. Sie umfasst eine Anzahl seitlich nebeneinander angeordneter Mäh- und Einzugszusammenbauten zum Abschneiden und Abtransportieren der Pflanzen, an deren Rückseiten das Erntegut zur Mitte der Maschine gefördert wird. Dort wird es durch Abgabeförderer in Form so genannter Schrägfördertrommeln, die um im Wesentlichen vertikale, jedoch leicht nach vorn geneigte Achse rotieren, nach hinten in den Einzugskanal des Feldhäckslers gefördert, wo es durch Vorpresswalzen verdichtet und einer Häckseltrommel zugeführt wird. Letztere häckselt das Erntegut und führt es einem Gebläse zu, welches das Erntegut aus dem Feldhäcksler hinaus und auf ein Transportfahrzeug fördert. Die Mäh- und Einzugseinrichtungen und die Abgabeförderer sind durch Getriebe mit festen Übersetzungsverhältnissen mit einem Abtrieb des Feldhäckslers verbunden.

Zur Schnittlängenveränderung ist es gebräuchlich, die Drehzahl der Vorpresswalzen des Feldhäckslers zu ändern, was durch Schaltgetriebe, verstellbare hydraulische Antriebe (s. beispielsweise WO 02/056672 A) oder kombinierte mechanischhydraulische Antriebe (WO 99/48353 A) erfolgen kann. Dabei bleibt die Drehzahl der Häckseltrommel etwa konstant, so dass die Schnittlänge umgekehrt proportional zur Drehzahl und Geschwindigkeit der Vorpresswalzen ist.

In einigen Regionen ist derzeit ein Trend zu größeren Schnittlängen zu beobachten. Die größeren Schnittlängen bedingen eine relativ hohe Geschwindigkeit der Vorpresswalzen. Um durch den Geschwindigkeitsunterschied bedingte Transportprobleme beim Übergang der Pflanzen von den Abgabeförderern der Maschine auf die Vorpresswalzen des Feldhäckslers zu vermeiden, besteht die Möglichkeit, alle angetriebenen Elemente der Maschine ebenfalls mit höherer Drehzahl anzutreiben. Dazu werden mehrstufige Schaltgetriebe verwendet. Es wurde auch vorgeschlagen, den Erntevorsatz mit einer zur Drehzahl der Vorpresswalzen proportionalen Geschwindigkeit anzutreiben (WO 99/48353 A). Als nachteilig ist bei einer Variation der Geschwindigkeiten aller angetriebener Elemente der Maschine anzusehen, dass auch die Drehzahlen der Mäh- und Einzugszusammenbauten erhöht werden, obwohl die Erhöhung keine Verbesserung der Erntegutförderung mit sich bringt und somit nicht erforderlich ist. Sie erhöht den Antriebsleistungsbedarf und bedingt einen erhöhten Verschleiß der Schneidmesser und der Bremseinrichtungen der Maschine.

Die WO 02/056672 A beschreibt einen Feldhäcksler mit einer Maschine zum Mähen von stängelartigem Erntegut, bei dem die Schrägfördertrommeln mit einer Geschwindigkeit angetrieben werden, die unabhängig von der Geschwindigkeit der Mäh- und Einzugszusammenbauten ist. Dazu werden die Vorpresswalzen und die Schrägfördertrommeln gemeinsam durch einen ersten Hydraulikmotor angetrieben, während die übrigen angetriebenen Elemente der Maschine durch einen zweiten Hydraulikmotor angetrieben werden. Als nachteilig ist hier anzusehen, dass zwei Antriebsverbindungen zwischen dem Feldhäcksler und der Maschine vorzusehen sind, nämlich zwischen den Schrägfördertrommeln und dem ersten Hydraulikmotor sowie zwischen den übrigen angetriebenen Elementen der Maschine und dem zweiten Hydraulikmotor. Das Anbringen und Abnehmen der Maschine am bzw. vom Feldhäcksler ist somit recht zeitaufwändig. Außerdem ist der Wirkungsgrad der hydraulischen Antriebe relativ schlecht.

In der EP 1 055 359 A wird vorgeschlagen, eine Querförderschnecke oder Querförderbänder eines Schneidwerks für einen Mähdrescher mit einstellbarer Geschwindigkeit hydraulisch anzutreiben, während der Mähwerksbalken mechanisch angetrieben wird. Die Haspel wird hydraulisch angetrieben, mit fester Geschwindigkeit. Auch hier ist eine Anzahl hydraulischer Antriebe mit eingeschränktem Wirkungsgrad vorgesehen.

Das der Erfindung zu Grunde liegende Problem wird darin gesehen, eine gegenüber dem erwähnten Stand der Technik verbesserte Maschine zum Ernten stängelartigen Ernteguts bereitzustellen, bei der eine Anpassung der Geschwindigkeit des Abgabeförderers an die Drehzahl der Vorpresswalzen des Feldhäckslers möglich ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann die Geschwindigkeit des Abgabeförderers durch eine Änderung des Übersetzungsverhältnisses des Getriebes ohne großen Aufwand an die Geschwindigkeit der Vorpresswalzen angepasst werden. Die Geschwindigkeit des Mäh- und Einzugszusammenbaus wird dabei nicht geändert, so dass ein unnötiger Verschleiß und erhöhter Antriebsenergiebedarf des Mäh- und Einzugszusammenbaus entfällt. Der Abgabeförderer ist insbesondere eine Schrägfördertrommel, die um eine leicht nach vorn geneigte Achse rotiert, um den Höhenunterschied zwischen der Maschine und einem Feldhäcksler zu überwinden, oder eine Querförderschnecke.

Durch die Verwendung des Getriebes mit änderbarem Übersetzungsverhältnis reicht es aus, eine einzige Antriebsverbindung zwischen der Maschine und dem Feldhäcksler herzustellen. Diese Antriebsverbindung treibt eine Welle an, die sowohl den Mäh- und Einzugszusammenbau als auch den Abgabeförderer antreibt. Es besteht weiterhin die Möglichkeit, die Maschine mit mehreren Wellen auszustatten, die durch separate Antriebsverbindungen vom Feldhäcksler her angetrieben werden und jeweils einen oder mehrere Mäh- und Einzugszusammenbauten und über ein Getriebe mit änderbarem Übersetzungsverhältnis jeweils einen Abgabeförderer antreiben. Bei anderen Ausführungsformen wäre es auch denkbar, das mit veränderbarem Übersetzungsverhältnis ausgestattete Getriebe vom Feldhäcksler her anzutreiben, getrennt vom Antrieb des Mäh- und Einzugszusammenbaus.

Vorzugsweise wird der Mäh- und Einzugszusammenbau durch einen komplett mechanischen Antriebsstrang von einem als Hauptantriebsmotor dienenden Verbrennungsmotor des Feldhäckslers angetrieben, d. h. unter Vermeidung leistungsverlustbehafteter hydraulischer Antriebskomponenten. Dadurch erhält man eine zur Drehzahl des Verbrennungsmotors proportionale Drehzahl des Mäh- und Einzugszusammenbaus. Da letztere in der Regel konstant ist, bleibt dann auch die Drehzahl des Mäh- und Einzugszusammenbaus konstant.

Als Getriebe mit änderbarem Übersetzungsverhältnis kommt primär ein mechanisches Getriebe, zum Beispiel ein Schaltgetriebe in Frage, bei dem verschiedene Übersetzungsstufen ausgewählt werden können, indem ausgewählt wird, welches Paar kämmender Zahnräder unter mehreren derartigen Paaren in den Antriebstrang eingefügt wird. Alternativ kann jedoch auch ein stufenlos arbeitendes Getriebe verwendet werden, etwa ein Riemenvariator. Es könnte auch ein hydraulisches Getriebe mit einer Pumpe und einem Motor verwendet werden.

In den Zeichnungen ist ein nachfolgend näher beschriebenes Ausführungsbeispiel der Erfindung dargestellt. Es zeigt:
- Fig. 1: einen Feldhäcksler mit einer Maschine zum Mähen von stängelartigem Erntegut in Seitenansicht und in schematischer Darstellung.
- Fig. 2: eine Draufsicht auf die Maschine und die Vorpresswalzen des Feldhäckslers, und
- Fig. 3: eine Draufsicht auf den Antriebsstrang des Feldhäckslers und der Maschine.

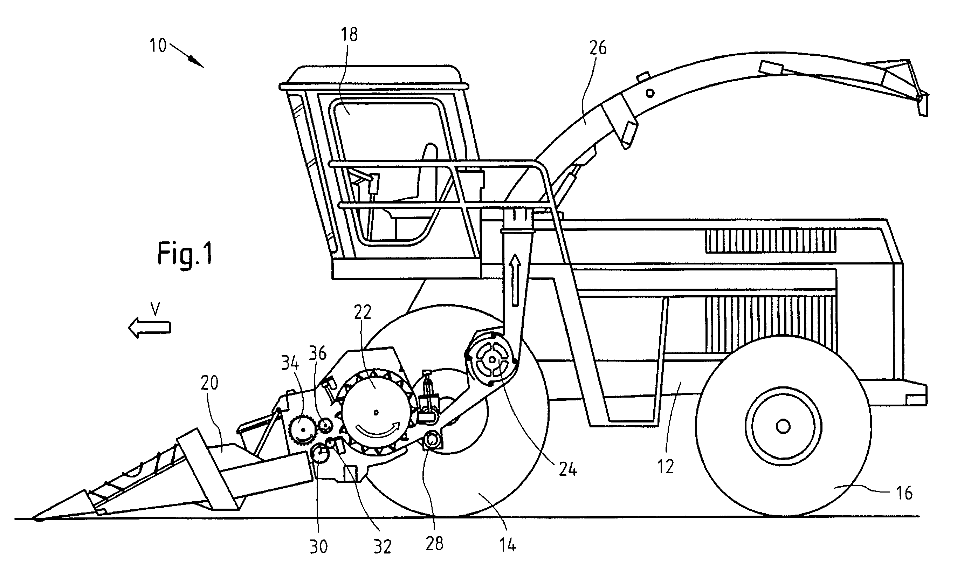

Eine in Figur 1 gezeigter selbstfahrender Feldhäcksler 10 baut sich auf einem Rahmen 12 auf, der von angetriebenen vorderen und lenkbaren rückwärtigen Rädern 14 und 16 getragen wird. Die Bedienung der Erntemaschine 10 erfolgt von einer Fahrerkabine 18 aus, von der aus eine Maschine 20 zum Mähen von stängelartigem Erntegut einsehbar ist. Mittels der Maschine 20 vom Boden aufgenommenes Gut, z. B. Mais, Gras oder dergleichen wird durch in einem Einzugskanal der Erntemaschine 10 angeordnete untere Vorpresswalzen 30, 32 und obere Vorpresswalzen 34, 36 einer Häckseltrommel 22 zugeführt, die es in kleine Stücke häckselt und es einer Fördervorrichtung 24 aufgibt. In der Regel sind die oberen Vorpresswalzen 34, 36 relativ zu den unteren Einzugswalzen 30, 32 bewegbar angeordnet und werden durch Federkraft gegen letztere gepresst. Das Gut verlässt die Erntemaschine 10 zu einem nebenher fahrenden Anhänger über einen drehbaren Austragsschacht 26. Zwischen der Häckseltrommel 22 und der Fördervorrichtung 24 ist eine aus zwei übereinander angeordneten Prozessorwalzen aufgebaute Nachzerkleinerungsvorrichtung 28 angeordnet, durch die das zu fördernde Gut der Fördervorrichtung 24 tangential zugeführt wird.

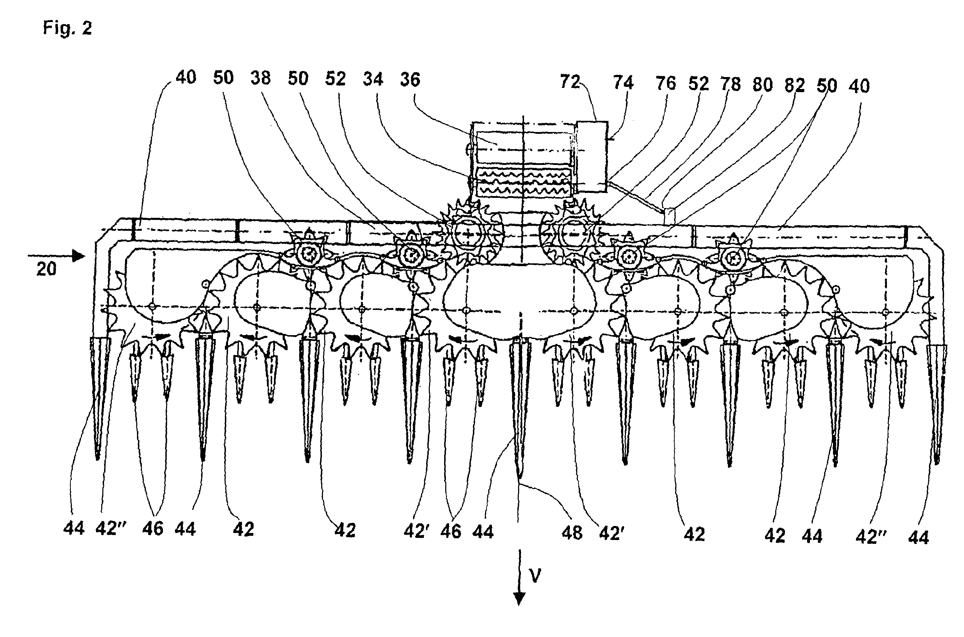

Die Figur 2 zeigt eine Draufsicht auf die Maschine 20, in der auch schematisch die Vorpresswalzen 34, 36 dargestellt sind. Die Maschine 20 weist einen Querträger auf, der sich aus einem mittleren, mit dem Einzugskanal des Feldhäckslers 10 verbundenem Segment 38 und zwei zum Transport auf einer Straße durch Hydraulikzylinder um eine parallel zur Vorwärtsrichtung V verlaufende Achse nach oben schwenkbaren, äußeren Segmenten 40 zusammensetzt. Am Querträger sind acht Mäh- und Einzugszusammenbauten 42 seitlich nebeneinander abgestützt. Es kann auch eine beliebige andere Anzahl an Mäh- und Einzugszusammenbauten 42 verwendet werden. Die Mäh- und Einzugszusammenbauten 42 weisen untere Schneidscheiben und darüber angeordnete Förderscheiben mit um ihren Umfang verteilten Aussparungen zur Aufnahme von Pflanzenstängeln auf. Ihnen sind größere Stängelteiler 44 und dazwischen angeordnete kleinere Stängelteiler 46 vorgelagert.

An der Rückseite der Zwickelbereiche zwischen den benachbarten Mäh- und Einzugszusammenbauten 42 (mit Ausnahme des Bereichs zwischen den beiden der Längsmittelebene 48 benachbarten Mäh- und Einzugszusammenbauten 42' und des Bereichs zwischen äußeren und den diesen jeweils benachbarten Mäh- und Einzugszusammenbauten 42'') befinden sich Querfördertrommeln 50. Die äußeren Mäh- und Einzugszusammenbauten 42" drehen sich jeweils gegensinnig gegenüber den drei nach innen folgenden Mäh- und Einzugszusammenbauten 42, so dass sich stromab der äußeren Mäh- und Einzugszusammenbauten 42" Querfördertrommeln 50 erübrigen. An den Rückseiten der der Längsmittelebene 48 benachbarten Mäh- und Einzugszusammenbauten 42' befinden sich Abgabeförderer 52 in Form so genannter Schrägfördertrommeln mit etwa vertikalen, jedoch leicht nach vorn geneigten Drehachsen, die dazu dienen, den Höhenunterschied zwischen dem Boden der Maschine 20 und dem Einzugskanal des Feldhäckslers 10 zu überwinden.

Beim Erntevorgang drehen sich die Mäh- und Einzugszusammenbauten 42 in den durch die Pfeile angedeuteten Richtungen. Sie trennen das Erntegut durch ihre Schneidscheiben vom Erdboden ab und nehmen es in den Aussparungen ihrer Förderscheiben auf. Es wird dann an ihren Rückseiten durch die Querfördertrommeln 50 im Zusammenwirken mit den Rückseiten der Mäh- und Einzugszusammenbauten 42 in Richtung auf die Längsmittelebene 48 der Maschine 20 transportiert. Dann wird es durch die Abgabeförderer 52 übernommen, die es zunächst in Richtung auf die Längsmittelebene 48 zu und dann nach hinten und oben in den Einzugskanal des Feldhäckslers 10 fördern. Da die dargestellte Maschine und ihr Betrieb beispielsweise in der EP 0 760 200 A, deren Offenbarung durch Verweis mit in den vorliegenden Unterlagen aufgenommen wird, detailliert beschrieben wird, kann hier auf weitere Erläuterungen verzichtet werden.

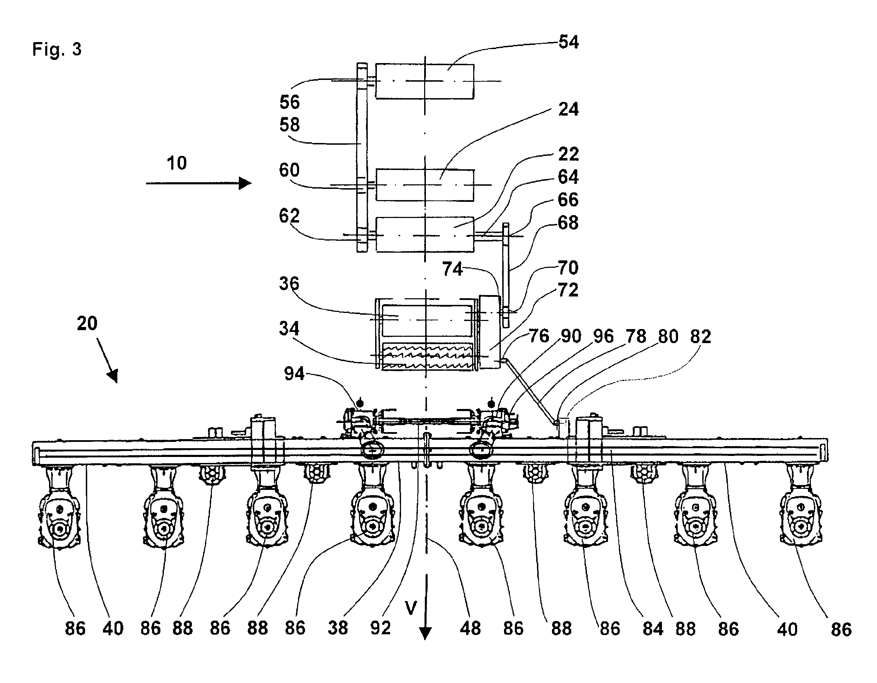

In der Figur 3 ist der Antriebsstrang des Feldhäckslers 10 und der Maschine 20 dargestellt. Ein Verbrennungsmotor 54 treibt über eine Riemenscheibe 56 einen Riemen 58 an, der mit einer Riemenscheibe 60, welche die Fördervorrichtung 24 antreibt, und mit einer Förderscheibe 62 zusammenwirkt, die die Häckseltrommel 22 antreibt. Die Häckseltrommel 22 treibt wiederum eine Welle 64 an, die eine Riemenscheibe 66 antreibt. Die Riemenscheibe 66 steht über einen Riemen 68 in Antriebsverbindung mit einer Riemenscheibe 70, die die Eingangswelle 74 eines Schnittlängengetriebes 72 antreibt. Alternativ ist eine Antriebsverbindung mit Zahnrädern zwischen der Häckseltrommel 22 und dem Schnittlängengetriebe 72 vorgesehen.

Das Schnittlängengetriebe 72 enthält Antriebselemente zum Antrieb der Vorpresswalzen 30 - 36. Die Drehzahl der Vorpresswalzen kann durch das Schnittlängengetriebe 72 in Stufen oder stufenlos verändert werden. Vorzugsweise wird ein Schnittlängengetriebe verwendet, wie es in der WO 99/48353 A beschrieben ist, d. h. das ein Planetengetriebe enthält, das mechanisch und hydraulisch angetriebene Elemente aufweist, um die Drehzahl der Vorpresswalzen 30 - 36 hauptsächlich mechanisch bereitzustellen und hydraulisch variieren zu können. Es ist aber auch ein rein hydraulischer Antrieb der Vorpresswalzen 30 - 36 denkbar.

Das Schnittlängengetriebe 72 leitet die Antriebsenergie vom Verbrennungsmotor 54 rein mechanisch an einen Wellenstummel 76 durch, an dem eine Gelenkwelle 78 mit fester oder variabler Länge lösbar befestigt ist. Dabei kann eine Drehzahlübersetzung stattfinden. Die Gelenkwelle 78 erstreckt sich vom Wellenstummel 76 des Schnittlängengetriebes 72 zu einem Wellenstummel 80 eines Eingangsgetriebes 82 der Maschine 20. Das Eingangsgetriebe 82 steht durch Zahnräder und/oder Ketten (nicht eingezeichnet) mit einer Querwelle 84 in Antriebsverbindung, die sich innerhalb der Segmente 38, 40 des Querträgers befindet und sich im Wesentlichen über die gesamte Breite der Maschine 20 erstreckt. Im Übergangsbereich zu den hochklappbaren Segmenten 40 sind in der Querwelle 84 geeignete Kupplungen (nicht eingezeichnet) vorgesehen. Die Querwelle 84 treibt über Kegelzahnräder (nicht eingezeichnet) oder dgl. acht Getriebe 86 an, die jeweils einem Mäh- und Einzugszusammenbau 42 zugeordnet sind. Die Querwelle 84 steht über vier weitere, kleinere Getriebe 88 mit den Querfördertrommeln 50 in Antriebsverbindung. Schließlich treibt die Querwelle 84 ein schaltbares Getriebe 90 an, das als Schaltgetriebe mit änderbarem Übersetzungsverhältnis ausgeführt ist. Ausgangsseitig treibt das schaltbare Getriebe 90 den in Figur 2 rechts eingezeichneten Abgabeförderer 52 und eine Welle 92 an, die ein weiteres Getriebe 94 antreibt, welches wiederum den in der Figur 2 links eingezeichneten Abgabeförderer 52 antreibt. Ein elektrisch oder hydraulisch von einem Bediener in der Fahrerkabine 18 fernsteuerbarer Aktor 96 erlaubt eine Änderung des Übersetzungsverhältnisses des schaltbaren Getriebes 90. In einer möglichen Ausführungsform erlaubt ein zweistufiges Getriebe 90 eine Änderung der Drehzahl der Abgabeförderer 52 von etwa 10 %. Das schaltbare Getriebe 90 kann ein Zahnradgetriebe sein, das zwei oder mehr Paare kämmender Zahnräder unterschiedlicher Durchmesser aufweist. Jeweils eines der Zahnradpaare wird durch ein bewegbares Kopplungsglied mit einer Welle in Antriebsverbindung gebracht.

Bei anderen Ausführungsformen sind zwei Querwellen 84 vorgesehen, die sich jeweils bis etwa zur Längsmittelebene 48 erstrecken und durch zugeordnete Gelenkwellen 78 von beiden Seiten des Einzugskanals her angetrieben werden. Dann kann der Antrieb des Getriebes 94 wie eingezeichnet erfolgen, oder von der Querwelle 84 der in Figur 3 links eingezeichneten Hälfte der Maschine 20 her; dann ist es ebenfalls als schaltbares Getriebe 90 auszuführen und die Welle 92 entfällt. Anstelle der dargestellten, relativ kleinen Mäh- und Einzugszusammenbauten 42, deren Durchmesser etwa 75 cm beträgt, können auch größere Mäh- und Einzugstrommeln verwendet werden. Auch kann ein Endlosförderer Verwendung finden, wie er in der DE 199 51 636 A beschrieben wird.

Das Schnittlängengetriebe 72 ermöglicht eine Veränderung der Drehzahl der Vorpresswalzen 30 - 36 in einem gewissen Schnittlängenbereich. Die Drehzahl der Mäh- und Einzugszusammenbauten 42 und der Querfördertrommeln 50, die über den beschriebenen, rein mechanischen Antriebsstrang vom Verbrennungsmotor 54 angetrieben werden, ist bei konstanter Drehzahl des Verbrennungsmotors 54 von der Geschwindigkeit der Vorpresswalzen 30 - 36 unabhängig. Sie ist derart gewählt, dass ein sicheres Abschneiden des zu erntenden stängelartigen Ernteguts, insbesondere Mais, und ein störungsfreier Transport des Ernteguts zu den Abgabeförderern 52 erfolgt. Bei größeren Schnittlängen, die höheren Geschwindigkeiten der Vorpresswalzen 30 - 36 entsprechen, kann durch das schaltbare Getriebe 90 die Geschwindigkeit der Abgabeförderer 52 vergrößert werden, was den Ernteguttransport in diesem Bereich verbessert. Die Drehzahl des Abgabeförderers 52 kann, falls kleinere Schnittlängen verlangt werden, analog wieder abgesenkt werden.

Beim Reversieren, das mittels eines Reversiermotors des Schnittlängengetriebes 72 bzw. einen dort zur Schnittlängenveränderung genutzten Hydraulikmotor erfolgen kann, drehen sich die angetriebenen Elemente der Maschine 20 in umgekehrter Richtung.

## Patentansprüche

1. Maschine (20) zum Mähen von stängelartigem Erntegut zur Anbringung an einem Feldhäcksler (10), mit wenigstens einem Mäh- und Einzugszusammenbau (42) zum Abschneiden und Abtransportieren von Erntegut und einem Abgabeförderer (52), dem Erntegut vom Mäh- und Einzugszusammenbau (42) zuführbar ist und der eingerichtet ist, es einem Einzugskanal des Feldhäckslers (10) zu übergeben, wobei die Geschwindigkeit des Abgabeförderers (52) gegenüber der Geschwindigkeit des Mäh- und Einzugszusammenbaus (42) veränderbar ist, **dadurch gekennzeichnet, dass** der Abgabeförderer (52) durch ein Getriebe (90) mit änderbarem Übersetzungsverhältnis mit dem Antrieb des Mäh- und Einzugszusammenbaus (42) verbunden ist.

2. Maschine (20) nach Anspruch 1, **dadurch gekennzeichnet, dass** der Mäh- und Einzugszusammenbau (42) durch eine vom Feldhäcksler (10) her antreibbare Welle (84) antreibbar ist, mit der auch das Getriebe (90) mit änderbarem Übersetzungsverhältnis in Antriebsverbindung steht.

3. Maschine (20) nach einem der vorhergehenden Ansprüche, **dadurch gekennzeichnet, dass** der Mäh- und Einzugszusammenbau (42) über einen rein mechanischen Antriebsstrang mit einem Verbrennungsmotor (54) des Feldhäckslers (10) verbindbar ist.

4. Maschine (20) nach einem der vorhergehenden Ansprüche, **dadurch gekennzeichnet, dass** das Getriebe (90) ein mechanisches Getriebe, insbesondere ein Schaltgetriebe ist.

5. Feldhäcksler (10) mit einer Maschine (20) nach einem der vorhergehenden Ansprüche.

## Claims

1. Machine (20) for cutting stalk-like harvested crop for attachment to a forage harvester (10), having at least one cutting and gathering assembly (42) for cutting off and transporting away harvested crop, and having a delivery conveyor (52) to which harvested crop can be fed from the cutting and gathering assembly (42) and which is set up to transfer it to a gathering duct of the forage harvester (10), the speed of the delivery conveyor (52) being variable relative to the speed of the cutting and gathering assembly (42), **characterized in that** the delivery conveyor (52) is connected by a gearbox (90) with variable transmission ratio to the drive of the cutting and gathering assembly (42).

2. Machine (20) according to Claim 1, **characterized in that** the cutting and gathering assembly (42) can be driven by a shaft (84) which is drivable from the forage harvester (10) and to which, also, the gearbox (90) with variable transmission ratio is drive-connected.

3. Machine (20) according to one of the preceding claims, **characterized in that** the cutting and gathering assembly (42) can be connected by a purely mechanical drive train to an internal combustion engine (54) of the forage harvester (10).

4. Machine (20) according to one of the preceding claims, **characterized in that** the gearbox (90) is a mechanical gearbox, in particular a manual gearbox.

5. Forage harvester (10) having a machine (20) according to one of the preceding claims.

## Revendications

1. Machine (20) pour couper des végétaux à tige, destinée à être montée sur une ensileuse (10), comportant au moins un ensemble de coupe et de ramassage (42), destiné à couper et à transporter les végétaux, et un convoyeur de transfert (52), vers lequel sont acheminés les végétaux provenant de l'ensemble de coupe et de ramassage (42) et lequel est conçu pour transférer ces végétaux dans un conduit d'alimentation de l'ensileuse (10), la vitesse du convoyeur de transfert (52) étant modifiable par rapport à la vitesse de l'ensemble de coupe et de ramassage (42), **caractérisée en ce que** le convoyeur de transfert (52) est relié au système d'entraînement de l'ensemble de coupe et de ramassage (42), par l'intermédiaire d'un engrenage (90) avec un rapport de transmission variable.

2. Machine (20) selon la revendication 1, **caractérisée en ce que** l'ensemble de coupe et de ramassage (42) peut être actionné par un arbre (84), qui est apte à être actionné à partir de l'ensileuse (10) et avec lequel l'engrenage (90) avec un rapport de transmission variable est également relié en transmission.

3. Machine (20) selon l'une des revendications précédentes, **caractérisée en ce que** l'ensemble de coupe et de ramassage (42) peut être relié, par l'intermédiaire d'une ligne de transmission purement mécanique, à un moteur à combustion interne (54) de l'ensileuse (10).

4. Machine (20) selon l'une des revendications précédentes, **caractérisée en ce que** l'engrenage est un engrenage mécanique, en particulier une boîte de vitesses.

5. Ensileuse (10) comportant une machine (20) selon une des revendications précédentes.
